# EUROPÄISCHE PATENTANMELDUNG

(11) **EP 2 450 648 A2**
(43) Veröffentlichungstag der Anmeldung: **09.05.2012**
(21) Anmeldenummer: 11188399.7
(22) Anmeldetag: 09.11.2011
(51) Int. Cl.: F25D 17/06

(54) **Gefriervorrichtung für Tiersamen**

(30) Priorität: 09.11.2010 DE 102010050829
(71) Anmelder: Minitüb GmbH, 84184 Tiefenbach (DE)
(72) Erfinder: Berndl, Mario, 84034 Landshut (DE); Simmet, Christian, Dr., 84036 Landshut (DE)
(74) Vertreter: Hartig, Michael

(57) **Zusammenfassung**

Kühlvorrichtung zur Einfrierung von biologischem Material, insbesondere Tiersamen, mit zumindest einem Lüfter und einer Kühlquelle zur Erzeugung eines Kühlmitteistromes und mit einer Gefrierkammer für das biologische Material, wobei die Kühlvorrichtung des weiteren einen ringförmigen Kanal aufweist, der mit der Gefrierkammer, verbunden ist, so dass der Kühlmittelstrom durch den Kanal und die Gefrierkammer zirkuliert werden kann, und die Kühlvorrichtung eine Strömungsleiteinrichtung für das Kühlmittel umfasst, die an der Gefrierkammer angeordnet und eingerichtet ist, den Kühlmittelstrom in mehrere Teilströme aufzuteilen und diese in die Gefrierkammer zu leiten, so dass in der Gefrierkammer zumindest in einem Teilbereich eine homogene Einfrierkurve erzeugt wird.

## Beschreibung

Die Erfindung betrifft eine Vorrichtung zur Tiefgefrierkonservierung von Tiersamen, insbesondere vom Bullensperma.

In der Tierproduktion spielt die künstliche Besamung eine wichtige Rolle. Der Anteil der künstlichen Besamung in der Produktion landwirtschaftlicher Nutztiere liegt zwischen 80 % und 90 %. Für eine umfassende Nutzung von hochwertigem genetischer Material bei Zuchttieren ist die Spermakonservierung von hoher Bedeutung, die den globalen und universellen Einsatz der künstlichen Besamung ohne Bindung an Zeit und Ort ermöglicht.

Trotz des zunehmenden Verständnisses der kryobiologischen Abläufe bei der Tiefgefrierkonservierung in der Rinderzucht überleben bisher lediglich 50 % der tiefgefrorenen Spermien den Einfrier- und Auftauvorgang und können zur Befruchtung von Eizellen verwendet werden. Um den Anteil der überlebenden Spermien weiter zu erhöhen, ist es notwendig, die Einfrierprofile weiter zu optimieren. Darüber hinaus sind Vorrichtungen erforderlich, mit welchen ein möglichst homogenes Einfrierverhalten aller einzufrierenden Samenproben einer Charge gemäß einer optimierten Einfrierkurve erreicht werden können.

Bisher bekannte Einfriergeräte umfassen eine Gefrierkammer mit einem zentralen, meistens in den Boden integrierten Ventilator sowie eine Steuerung zur Temperaturregelung und Dosierung der Zufuhr eines Kühlmittels, wie beispielsweise flüssigen Stickstoffs. Mit dem Ventilator wird in der Vorrichtung ein vertikaler Kühlmittelstrom erzeugt, wobei der Stickstoff aus einem Stickstoffbehälter über eine Rohrleitung mit Hilfe eines Magnetventils in das Einfriergerät zudosiert wird. Dabei wird die Stickstoffzufuhr so gesteuert, dass eine voreingestellte Temperatur in der Gefrierkammer eingehalten wird. Der flüssige Stickstoff wird dafür auf das Lüfterrad des Ventilators gespritzt, um den Strahl des flüssigen Stickstoffs in kleine Tröpfchen zu zerschlagen. Dadurch wird die komplette und schnelle Verdampfung des Stickstoffs erleichtert und das kalte Stickstoffgas in der Gefrierkammer verteilt. Üblicherweise wird der Einfriervorgang bei -120° C gestartet. Nach 15 Minuten wird die Temperatur in der Gefrierkammer auf-130 bis -140° C abgesenkt. Nach insgesamt 20 Minuten ist der Prozess beendet und die gefrorenen Röhrchen, die gefrorenen Tiersamen enthalten, werden aus dem Gerät entnommen und in flüssigem Stickstoff eingelagert.

Typischerweise wird die Gefrierkammer des Einfriergeräts für einen Tiefgefriervorgang mit einem oder mehreren Stapeln mit als Rampen bezeichneten Trägern bestückt. Die Umströmung der einzelnen Röhrchen mit kaltem Stickstoffgas ist bei der bekannten Vorrichtung jedoch stark abhängig von der Position der Röhrchen sowohl auf der Rampe als auch im Rampenstapel. Röhrchen, die sich auf den unteren Rampen und in den Endbereichen der Rampen befinden werden schneller abgekühlt und eingefroren als Röhrchen in der Mitte der Rampe und im mittleren oder oberen Bereich des Rampenstapels.

Diese Einfriercharakteristik wird vor allem durch den in der Gefrierkammer des Geräts gebildeten inhomogenen Kühlmittelstrom bewirkt, der nur Teilbereiche der Gefrierkammer durch.- strömt und in sich unterschiedlich starke Strömungsgeschwindigkeiten aufweist. Infolge des inhomogenen Kühlmittelstroms bilden sich Zonen mit unterschiedlichen Temperaturen, in denen die Röhrchen unterschiedlich schnell abkühlen, woraus erhebliche Unterschiede in der Samenqualität innerhalb einer eingefrorenen Charge resultieren.

Eine Vorrichtung zur Einfrierung von biologischem Material ist aus der EP 1 793 185 A2 bekannt. Die dort offenbarte Vorrichtung umfasst eine erste Kammer zur Aufnahme von biologischen Material, das eingefroren werden soll, eine zweite Kammer zur Aufnahme einer Kryosubstanz, einen Ventilator zur Reduzierung der Temperatur in der ersten Kammer durch eine erzwungene Konvektion der Luft in der ersten Kammer in Richtung der zweiten Kammer, wobei an der zweiten Kammer eine Wärmeübertragung erfolgt, sowie eine Steuerungseinrichtung zur Überwachung der Temperatur der ersten Kammer und zur Steuerung des Ventilators basierend auf der überwachten Temperatur.

US 4,227,381 offenbart eine Vorrichtung zur Einfrierung von Chargen mit einem Ventilator für eine kontinuierliche Zirkulation von Luft durch eine Kühlkammer und durch eine Rückführleitung. Ein Kühlgas, wie beispielsweise flüssiger Stickstoff wird aus einem Tank zur zurückzirkulierten Luft hinzugefügt, um die Temperatur in dem System kontrolliert abzusenken und eine rasche Einfrierung zu gewährleisten.

US 6,044,648 offenbart eine Kühlvorrichtung zur raschen Abkühlung von biologischen Proben. Die Kühlvorrichtung umfasst ein Gehäuse mit einer Kammer und einem Luftzirkulationsweg, der sich zumindest teilweise in der Kammer befindet. Ein Ventilator ist betriebstechnisch mit der Kammer zum Zirkulieren von Luft auf dem Luftzirkulationsweg verbunden und ein perforierte Schlauch ist im Luftzirkulationsweg angeordnet, um Kühlmittel in Gasform in den Luftzirkulationsweg zu verteilen.

Die aus dem Stand der Technik bekannten Kühlvorrichtungen haben den Nachteil, dass keine ausreichend homogenen Einfrierkurven in dem Bereich der Aufnahmekammer, in dem die Proben angeordnet sind, erzielt werden können, so dass eine große Variabilität in der Qualität der nach dem Einfrieren aufgetauten biologischen Proben entsteht.

Es ist die Aufgabe der Erfindung, eine Gefriervorrichtung für Tiersamen, insbesondere Bullensamen bereitzustellen, mit der eine besonders homogene Einfrierkurve in einer Gefrierkammer für eine Vielzahl von individuellen Samenportionen einer einzufrierenden Charge erreicht werden kann, sowie ein entsprechendes Verfahren.

Die Aufgabe wird gelöst durch eine Vorrichtung mit den Merkmalen gemäß Anspruch 1 und durch ein Verfahren mit den Merkmalen gemäß Anspruch 13.

Die erfindungsgemäße Gefriervorrichtung zur Einfrierung von biologischem Material, wie beispielsweise Tiersamen, insbesondere Bullensamen, umfasst zumindest einen Lüfter und eine Kühlquelle zur Erzeugung eines Kühlmittelstromes und eine Gefrierkammer zur Aufnahme von biologischem Material, wobei die Gefriervorrichtung des Weiteren einen ringförmigen Kanal, der mit der Gefrierkammer verbunden ist, so dass der Kühlmittelstrom durch den Kühlmittelkanal und die Gefrierkammer zirkuliert werden kann, und eine Strömungsleiteinrichtung für das Kühlmittel, die an der Gefrierkammer angeordnet und eingerichtet ist, den Kühlmittelstrom so in mehrere Teilströme aufzuteilen und die Teilströme so in die Gefrierkammer zu leiten, dass in der Gefrierkammer zumindest in einem Teilbereich eine homogene Einfrierkurve erzeugt wird.

Mit der erfindungsgemäßen Kühlvorrichtung kann eine vollständige Umströmung aller in der Gefrierkammer angeordneten Samenportionen in der Weise erreicht werden, dass identische Einfrierkurven für alle Samenportionen unabhängig von ihrer Position in der Gefrierkammer erhalten werden können. Insbesondere wird der in die Gefrierkammer eintretende Kühlmittelstrom durch die Strömungsleiteinirichtung in mehrere Teilströme aufgeteilt, wobei die Strömungsleiteinrichtung so eingerichtet ist, dass die Teilströme eine homogene Einfrierkurve über einen Teil oder den gesamten Querschnitt der Strömung des Kühlmittels in der Gefrierkammer, insbesondere den gesamten Querschnitt der Gefrierkammer, und zumindest in dem Bereich in der Gefrierkammer, in dem die Samenportionen angeordnet sind, oder im gesamten Bereich der Gefrierkammer erzeugen. Dadurch können Unterschiede in der Samenqualität der Samenproben innerhalb einer Charge vermieden und Chargen mit einer Vielzahl von bis zu mehreren Tausend Samenproben kontrolliert eingefroren werden. Die Homogenität der Temperatur in der Gefrierkammer kann optimiert werden, ohne dass Kälte- oder Wärmezonen entstehen.

Bei dem Kühlmittelstrom handelt es sich vorzugsweise um einen kühlen Gasstrom, insbesondere einen Stickstoff enthaltenden Gasstrom, der mit Hilfe eines Kühlmittels, wie beispielsweise flüssigem Stickstoff gekühlt und erzeugt wird.

Gemäß einer bevorzugten Ausführungsform ist die Strömungsleiteinrichtung so eingerichtet, dass an mehreren Stellen entlang des eintretenden Kühlmittelstromes parallel gerichtete Teilströme in die Gefrierkammer abgelenkt werden. Entsprechend dem Durchmesser und der Anzahl der erzeugten Teilströme kann eine Gefrierkammer, unabhängig von ihrer Höhe oder Länge derart mit Kühlmittel so durchströmt werden, dass homogene Einfrierkurven für alle Samenportionen erreicht werden.

Gemäß einer bevorzugten Ausführungsform ist die Strömungsleiteinrichtung so eingerichtet, dass die Strömungsgeschwindigkeit zwischen zumindest zwei benachbarten Teilströmen zu-oder abnimmt. Dies kann wesentlich zur Erzielung homogener Einfrierkurven für alle Samenportionen beitragen. Insbesondere kann es sinnvoll sein, an der Seite der Gefrierkammer, an der diese von der Außenseite durch eine Tür zugänglich ist, die Strömungsgeschwindigkeit oder Stärke des dort vorbeiströmenden Teilstroms gegenüber dem dazu benachbarten Teilstrom zu erhöhen, um eine Erwärmung des Kühlmittels an der Tür zu kompensieren. Darüber hinaus ist es denkbar, die Strömungsgeschwindigkeit der Teilströme über einen Teil oder die gesamte Höhe oder Breite der Gefrierkammer zu erhöhen oder zu verringern. Die Erhöhung oder Verringerung der Strömungsgeschwindigkeit kann stetig und darüber hinaus linear, exponentiell oder gemäß einer anderen geeigneten Gesetzmäßigkeit erfolgen. Durch eine Erhöhung oder Verringerung der Strömungsgeschwindigkeit zwischen benachbarten Teilströmen können auch Temperaturgradienten in der Gefrierkammer, die dadurch entstehen, dass Kühlmittel geringerer Temperatur gegenüber wärmerem Kühlmittel absinkt, ausgeglichen werden. Die Erhöhung oder Verringerung der Strömungsgeschwindigkeit zwischen benachbarten Teilströmen kann beispielsweise 5 %, 10 %, 20 %, oder 30 % oder einen anderen geeigneten Wert umfassen, der experimentell ermittelt werden kann.

Bei anderen Ausführungsformen ist es jedoch auch denkbar, die Strömungsleiteinrichtung so einzurichten, dass aus dem Kühlmittelstrom in sich homogene Teilströme mit näherungsweise derselben Stärke in die Gefrierkammer abgelenkt werden. Dies kann vorteilhaft sein, wenn in der Gefrierkammer keine unterschiedlichen Temperaturen an verschiedenen Orten in der Gefrierkammer, insbesondere im Bereich der darin angeordneten Samenportionen, zu erwarten sind.

Gemäß einer weiteren bevorzugten Ausführungsform umfasst die Strömungsleiteinrichtung mehrere in Richtung des eintretenden Kühlmittelstromes hintereinander angeordnete Bleche, deren Breite in Richtung des eintretenden Kühlmittelstromes zunimmt. Da Teile des Kühlmittelstromes mit den Blechen sukzessive aus dem Kühlmittelstrom in die Gefrierkammer abgelenkt werden, kann bei geeigneter Wahl der Anzahl der Bleche und ihrer Anordnung ein Kühlmittelstrom mit einem größeren Durchmesser als dem des ursprünglichen Kühlmittelstroms in der Gefrierkammer erzeugt werden. Es ist denkbar durch Anpassung der Anzahl und Anordnung der Bleche Gefrierkammern unterschiedlicher Höhe oder Durchmessers mit bezüglich der Stärke und des Durchmessers gleichen Kühlmittelströmen zu versorgen und zu kühlen.

Gemäß einer weiteren bevorzugten Ausführungsform werden die Teilströme durch die Strömungsleiteinrichtung im Verhältnis zum Kühlmittelstrom um 90° abgelenkt. Es sind jedoch auch beliebige andere Ablenkungswinkel, wie beispielsweise 10°, 20°, 30°, 45°, 60°, oder 75° oder entsprechende Spitze Winkel im Verhältnis zur Strömungsrichtung des eintretenden Kühlmittelstroms denkbar.

Gemäß einer weiteren bevorzugten Ausführungsform wird die Gefrierkammer horizontal von den Teilströmen durchströmt und mündet der Kanal seitlich und gegebenenfalls vertikal in die Gefrierkammer, wobei die Teilströme durch die Strömungsleiteinrichtung in die horizontale Richtung abgelenkt werden. Durch die seitliche Einführung des Kanals in die Gefrierkammer kann eine sehr kompakte und platzsparende Kühlvorrichtung bereitgestellt werden.

Der Abstand zwischen den Blechen entlang der Zugangsseite der Gefrierkammer kann gleich sein oder auch variieren. Die Bleche sind vorzugsweise parallel zueinander angeordnet und entlang der Zugangsöffnung oder Eingangsseite zur Gefrierkammer ausgerichtet.

Gemäß einer bevorzugten Ausführungsform umfasst die Kühlvorrichtung eine Einrichtung zur Vergleichmäßigung des Kühlmittelstromes mit einer mehrere Öffnungen aufweisenden Platte, welche vom Kühlmittel durchströmt wird.

Gemäß einer bevorzugten Ausführungsform sind die Öffnungen der Platte, insbesondere deren Zahl und Größe so gewählt, dass vor der Platte ein Staudruck des Kühlmittelstromes im Kanal zu erzeugt wird.

Mit Hilfe der Platte kann der Kühlmittelstrom in der Gefrierkammer so vereinheitlicht werden, dass keine Turbulenzen auftreten und ein im wesentlichen laminarer Kühlmittelstrom sowohl in den Teilströmen als auch insgesamt über den gesamten Querschnitt der Gefrierkammer erzeugt wird. Dies trägt zur Erzeugung homogener Einfrierkurven über einen Teil des oder auch den gesamten Querschnitt der Gefrierkammer bei. Die Öffnungen der Platte können gleich sein oder entlang einer Richtung, beispielsweise entlang der Höhe der Gefrierkammer zunehmen, um das Erreichen unterschiedlicher Strömungsgeschwindigkeiten der Kühlmittelteilströme in einer Richtung der Gefrierkammer, insbesondere der Höhe zu unterstützen. Die Öffnungen der Platte können kreisförmig, insbesondere mit in einer Richtung auf der Platte zunehmendem Durchmesser, jedoch auch eckig, insbesondere quadratisch, insbesondere mit in einer oder mehreren Richtungen auf der Platte zunehmender Breite und/oder Höhe, oval oder als Langlöcher, ausgebildet sein.

Gemäß noch einer weiteren bevorzugten Ausführungsform ist die Einrichtung zur Vergleichmäßigung des Kühlmittelstromes am Eingang der Gefrierkammer stromabwärts der Strömungsleiteinrichtung angeordnet. Es wird dadurch eine vorteilhafte Kopplung der Strömungsleitvorrichtung und der Einrichtung zur Vergleichmäßigung des Kühlmittelstromes erzielt. Es ist auch denkbar, die Strömungsleitvorrichtung direkt an der Einrichtung zur Vergleichmäßigung des Kühlmittelstromes zu befestigen oder umgekehrt.

Gemäß einer weiteren bevorzugten Ausführungsform ist der Lüfter so ausgebildet, dass der Kühlmittelstrom im Lüfter um 90° umgelenkt wird. Vorzugsweise umfasst die Vorrichtung mehrere Lüfter, die den Kühlmittelstrom um 90° umlenken.

Gemäß noch einer weiteren Ausführungsform umfasst die Kühlvorrichtung zumindest einen in Strömungsvorrichtung vor der Gefrierkammer angeordneten ersten Lüfter und zumindest einen in Strömungsrichtung hinter der Gefrierkammer angeordneten zweiten Lüfter.

Durch die Verwendung zumindest eines Lüfters vor der Gefrierkammer und zumindest eines weiteren Lüfters hinter der Gefrierkammer wird die Ausbildung eines besonders homogenen Kühlmittelstromes in der Gefrierkammer unterstützt. In der Nähe des zweiten Lüfters kann zudem eine Heizung angeordnet sein, so dass der zweite Lüfter in Verbindung mit der Heizung insbesondere für das Aufwärmen der Vorrichtung sowie auch zur Steuerung der Temperaturkurve beim Einfrieren eingesetzt werden kann.

Gemäß einer weiteren Ausführungsform ist der Kanal für den Kühlmittelstrom unter der Gefrierkammer der Kühlmittelvorrichtung vorgesehen und ist der erste Lüfter auf Höhe der Gefrierkammer und der zweite Lüfter unter der Gefrierkammer angeordnet. Dadurch kann trotz eines großen Gefrierkammervolumens eine kompakte Kühlvorrichtung bereit gestellt werden, die gegebenenfalls auch beweglich ausgebildet sein kann.

Gemäß noch einer weiteren Ausführungsform umfasst die Kühlvorrichtung mehrere nebeneinander angeordnete erste und mehrere nebeneinander angeordnete zweite Lüfter, die mit dem Kanal verbunden sind oder einen Teil desselben bilden, wobei mit den jeweils nebeneinander angeordneten ersten und zweiten Lüftern durch Kopplung der jeweiligen Ausgangsströme ein entsprechend der Anzahl der ersten und zweiten Lüfter verbreiteter Kühlmittelstrom erzeugt wird.

Durch die Anordnung mehrerer Lüfter nebeneinander kann in der Kühlvorrichtung eine lang gestreckte Gefrierkammer für biologisches Material gebildet werden, die die Aufnahme einer großen Zahl von Samenproben ennöglicht, wobei die Gefrierkammer durch einen ringförmigen Kanal mit einer Breite, die der Längserstreckung der Gefrierkammer in der Kühlvorrichtung entspricht, mit einem Kühlmittelstrom versorgt werden kann, so dass eine homogene Einfrierkurve für sämtliche Samenproben erreicht werden kann.

Gemäß einer weiteren Ausführungsform verläuft der Kühlmittelstrom bezüglich der Standfläche der Vorrichtung horizontal durch die Gefrierkammer. Alternativ kann die Vorrichtung jedoch auch so ausgebildet sein, dass der Kühlmittelstrom vertikal durch die Gefrierkammer strömt.

Gemäß einer weiteren bevorzugten Ausführungsform umfasst die Kühlvorrichtung zumindest eine Einrichtung zur Einleitung eines Kühlmittels in den Kanal. Die Einrichtung zur Einleitung eines Kühlmittels in den Kanal kann durch eine sich in den Kanal und gegebenenfalls in die Mitte des Kanals erstreckende Düse gebildet werden, mit der ein Kühlmittel, wie beispielsweise flüssiger Stickstoff aus einem Kryobehälter in den Kanal eingeführt werden kann,

Gemäß noch einer weiteren bevorzugten Ausführungsform ist die Gefrierkammer, von der Oberseite der Kühlvorrichtung zugänglich.

Gemäß einer anderen bevorzugten Ausführungsform umfasst die Kühlvorrichtung mehrere Rampen, die in der Gefrierkammer angeordnet werden können, und auf welchen Behälter, wie beispielsweise Röhrchen zur Aufnahme von biologischem Material, wie beispielsweise Samenproben, angeordnet werden können. Auf den Rampen werden die Röhrchen vorzugsweise jeweils nebeneinander liegend in Lagen von einzelnen Röhrchen angeordnet.

Gemäß noch einer anderen Ausführungsform sind die Rampen aufeinander stapelbar, wobei zwischen den Rampen ein Abstand verbleibt, der so gewählt ist, dass die Behälter zur Aufnahme von biologischem Material ungehindert umströmt werden können, ohne sich gegenseitig zu verdecken, und die einzelnen Röhrchen mit einer zur optimalen und homogenen Kühlung ausreichenden Menge des Kühlmittels in Kontakt kommen. Vorzugsweise ist der Abstand zwischen den Rampen 12 mm. Denkbar sind jedoch auch davon abweichende Abstände, wie beispielsweise 6, 8, 10,14,16,18,20 mm und andere. Darüber hinaus ist es vorteilhaft, die Höhe der Rampen oder den Abstand der Öffnungen in der Platte so zu wählen, dass sich die Öffnungen in der Platte auf gleicher Höhe mit den Behältern zur Aufnahme von biologischem Material befinden, so dass das aus den Öffnungen austretende Kühlmittel direkt auf die auf den Rampen angeordneten Behälter trifft und diese in Längsrichtung umströmt.

Gemäß einer weiteren Ausführungsform weisen die Rampen Führungen auf, mit welchen ein Instrument zur Entnahme der auf einer Rampe angeordneten Behälter nach dem Einfriervorgang geführt werden kann. Ein geeignetes Instrument zur Entnahme von auf der Rampe angeordneten Behältern, insbesondere von Samenröhrchen, kann beispielsweise eine Klammer, Gabel oder Zange sein, die bei der Entnahme der Samenröhrchen über die Rampe geschoben wird und dabei entlang der Führungen der Rampe geführt wird. Da das Instrument durch die Führungen auf der Rampe geführt werden kann, ist es möglich, lediglich die Samenröhrchen von der Rampe zu entnehmen, auf der das Instrument geführt wird, ohne dass Samenröhrchen aus einer darunter liegenden Rampe ergriffen werden, was zu einem Herunterfallen oder Bruch der Röhrchen und insgesamt zu einer Behinderung und Verlangsamung der Entnahme der gefrorenen Samenröhrchen führen kann.

Gemäß noch einer weiteren bevorzugten Ausführungsform umfasst die Kühlvorrichtung eine Steuerung, mit der die Strömungsgeschwindigkeit des Kühlmittels, die Menge des in den Kanal zugeführten Kühlmittels, die Temperatur in der Gefrierkammer, insbesondere Temperaturprofile oder Kombinationen dieser Parameter zur Erzeugung bestimmter Temperaturprofile gesteuert oder vorprogrammiert werden können.

Erfindungsgemäß wird darüber hinaus ein Verfahren zur Einfrierung von biologischem Material, insbesondere Tiersamen, in einer Kühlvorrichtung mit zumindest einem Lüfter und einer Kühlquelle zur Erzeugung eines Kühlmittelstromes und mit einer Gefrierkammer das biologische Material bereitgestellt, wobei die Kühlvorrichtung des weiteren einen ringförmigen Kanal aufweist, der mit der Gefrierkammer verbunden ist, so dass der Kühlmittelstrom durch den Kanal und die Gefrierkammer zirkuliert werden kann, wobei das Verfahren ein Aufteilen des Kühlmittelstromes in mehrere Teilströme mittels einer Strömungsleiteinrichtung und ein Leiten der Teilströme in die Gefrierkammer umfasst, in der Weise, dass in der Gefrierkammer zumindest in einem Teilbereich eine homogene Einfrierkurve erzeugt wird

Mit dem erfindungsgemäßen Verfahren können in der Gefrierkammer über einen Teil oder den gesamten Querschnitt der Strömung des Kühlmittels in der Gefrierkammer, insbesondere den gesamten Querschnitt der Gefrierkammer, und zumindest in dem Bereich in der Gefrierkammer, in dem die Samenportionen angeordnet sind, oder im gesamten Bereich der Geftierkammer identische Einfrierkurven für darin angeordnete Proben biologischen Materials erzeugt werden, so dass alle Proben denselben Einfrierbedingungen unterliegen und dadurch ein deutlich höherer Anteil der Proben im Vergleich zu bisher bekannten Verfahren den Einfriervorgang und den später vor einer Besamung durchgeführten Auftauvorgang überlebt.

Gemäß einer bevorzugten Ausführungsform umfasst das Verfahren das Ablenken von parallel gerichteten Teilströmen durch die Strömungsleiteinrichtung in die Gefrierkammer an mehreren Stellen entlang des Kühlmittelstromes. Dadurch wird die kontrollierte Erzeugung von Teilströmen des Kühlmittels mit gewünschten Stärken möglicht, wobei abhängig vom Durchmesser und der Anzahl der erzeugten Teilströme Gefrierkammer unterschiedlicher Höhe und Länge so mit Kühlmittel durchströmt werden können, dass homogene Einfrierkurven für alle Samenportionen erreicht werden.

Gemäß einer weiteren bevorzugten Ausführungsform umfasst das Verfahren, dass das Ablenken der parallel gerichteten Teilströmen derart erfolgt, dass die Strömungsgeschwindigkeit zwischen zumindest zwei benachbarten Teilströmen zunimmt. Dadurch kann die Erwärmung des Kühlmittels in bestimmten Bereichen der Gefrierkammer, insbesondere an einer oder mehreren Seitenwänden der Gefrierkammer und das Absinken von Kühlmittel niedriger Temperatur in der Gefrierkammer gegenüber wärmerem Kühlmittel kompensiert werden, wodurch das Erreichen von über die gesamte Gefrierkammer homogenen Einfrierkurven unterstützt wird. Die zur Erzielung homogener Einfrierkurven geeignete Abnahme oder Zunahme der Strömungsgeschwindigkeit kann linear sein oder anderen Abhängigkeiten folgen, oder auch auf der Grundlage experimentell ermittelter Einfrierkurven in verschiedenen Bereichen der Gefrierkammer bestimmt werden

Gemäß einer anderen bevorzugten Ausführungsform umfasst das Verfahren, dass die Gefrierkammer horizontal von den Teilströmen durchströmt wird und der Kühlmittelstrom vertikal in die Gefrierkammer mündet, wobei die Teilströme durch die Strömungsleiteinrichtung aus dem Kühlmittelstrom in die horizontale Richtung abgelenkt werden, so dass die Summe der Querschnitte der parallelen Teilströme gegenüber dem Querschnitt des ursprünglichen Kühlmittelstromes vergrößert ist. Durch das Umlenken der Teilströme aus der vertikalen in die horizontale Richtung kann eine kompakte Kühlvorrichtung bereitgestellt werden, da ein Kühlmittelstrom mit vergleichsweise geringem Durchmesser seitlich zur Gefrierkammer zugeführt werden kann, der mithilfe der Strömungsleiteinrichtung in einen Kühlmittelstrom größeren Durchmessers umgelenkt werden kann.

Gemäß noch einer anderen Ausführungsform umfasst das Verfahren ein Vergleichmäßigen des Kühlmittelstromes beim Eintritt in die Gefrierkammer zur Erzeugung einer laminaren Strömung. Mit einer laminaren Strömung des Kühlmittels wird das Erreichen homogener Einfrierkurven in allen Bereichen der gesamten Gefrierkammer unterstützt.

Gemäß einer weiteren Ausführungsform umfasst das Verfahren ein Anordnen einer mehrere Öffnungen aufweisenden Platte im Kühlmittelstrom, so dass diese vom Kühlmittelstrom durchströmt wird und ein Betreiben der Kühlvorrichtung in der Weise, dass vor der Platte ein Staudruck des Kühlmittelstromes im Kanal zu erzeugt wird.

Gemäß einer anderen Ausführungsform umfasst das Verfahren ein Stapeln mehrerer Rampen in der Gefrierkammer, auf welchen Behälter zur Aufnahme von biologischem Material angeordnet sind, wobei zwischen den Rampen ein Abstand verbleibt, der so gewählt ist, dass die Behälter zur Aufnahme von biologischem Material ungehindert und mit einer ausreichenden Menge an Kühlmittel umströmt werden, um eine homogene Einfrierkurve für alle Behälter zu erhalten.

Gemäß noch einer anderen Ausführungsform umfasst das Verfahren ein Entnehmen von mehreren Behälter von einer in der Gefrierkammer angeordneten Rampe, wobei ein Instrument zur Entnahme der auf der Rampe angeordneten Behälter auf Führungen der Rampe geführtwird. Die Führungen auf der Rampe bewirken, dass mit dem Instrument lediglich die auf der jeweiligen Rampe, auf der das Instrument geführt wird, angeordneten Behälter, insbesondere Röhrchen, ergriffen werden, so dass eine rasche Entnahme der Röhrchen von der Rampe erreicht werden kann.

Gemäß noch einer weiteren Ausführungsform umfasst das Verfahren ein Steuern eines oder mehrerer Parameter umfassend die Strömungsgeschwindigkeit des Kühlmittels, die Menge des in den Kanal eingeführten Kühlmittels, die Temperatur in der Gefrierkammer oder Kombinationen dieser Parameter, um eine gewünschte Einfrierkurve in der Gefrierkammer zu erhalten.

Weitere Eigenschaften, Merkmale und Vorteile der Erfindung ergeben sich aus der nachfolgenden Beschreibung einer beispielhaften Ausführungsform anhand der beigefügten Zeichnung, in der:
- Fig. 1: die erfindungsgemäße Vorrichtung gemäß einer bevorzugten Ausführungsform in einer Querschnittsansicht perspektivisch von oben zeigt;
- Fig. 2: die erfindungsgemäße Vorrichtung gemäß der Ausführungsform perspektivisch von Außen zeigt;
- Fig. 3: die erfindungsgemäße Vorrichtung gemäß der in Fig. 2 gezeigten Ausführungsform in einer Seitenansicht zeigt, wobei der Aufbau der Kühlvorrichtung im Inneren zu erkennen ist;
- Fig. 4: die erfindungsgemäße Vorrichtung gemäß der in Fig. 1 gezeigten Ausführungsform im Querschnitt entlang der Linie H-H in Fig. 3 zeigt;
- Fig. 5: die erfindungsgemäße Vorrichtung gemäß der in Fig. 1 gezeigten Ausführungsform aufgeschnitten perspektivisch zeigt;
- Fig. 6: eine Rampe zur Aufnahme von Probenröhrchen zeigt, die zur Aufnahme in der in den Fig. 1 bis 5 gezeigten Vorrichtung geeignet ist; und
- Fig. 7a,b: ein Instrument zur Entnahme von Probenröhrchen von einer Rampe zeigt, das auf der Rampe geführt werden kann.

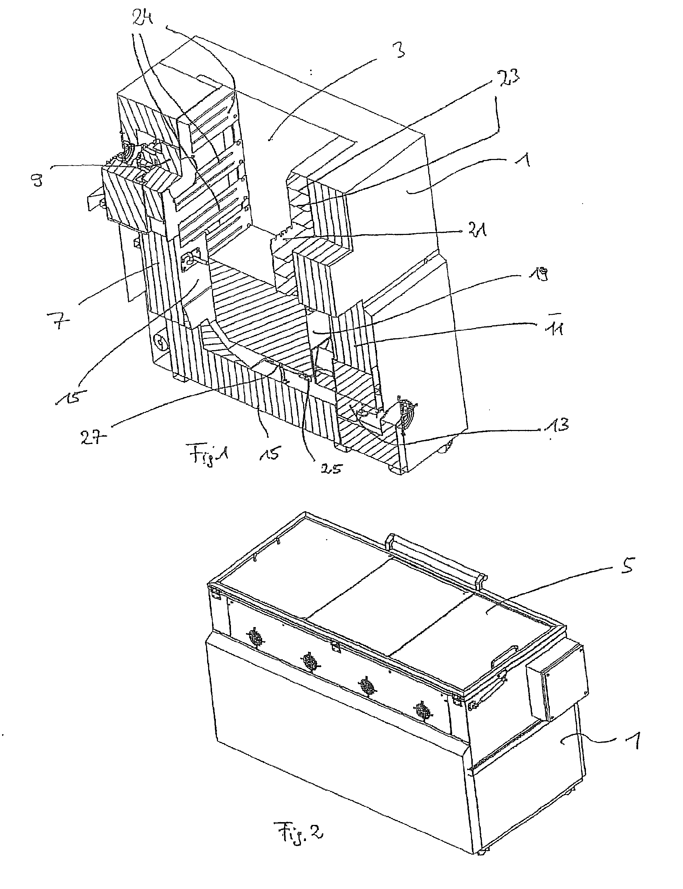

Im nachfolgenden wird eine beispielhafte Ausführungsform der Erfindung anhand der Fig. 1 bis 7b beschrieben.

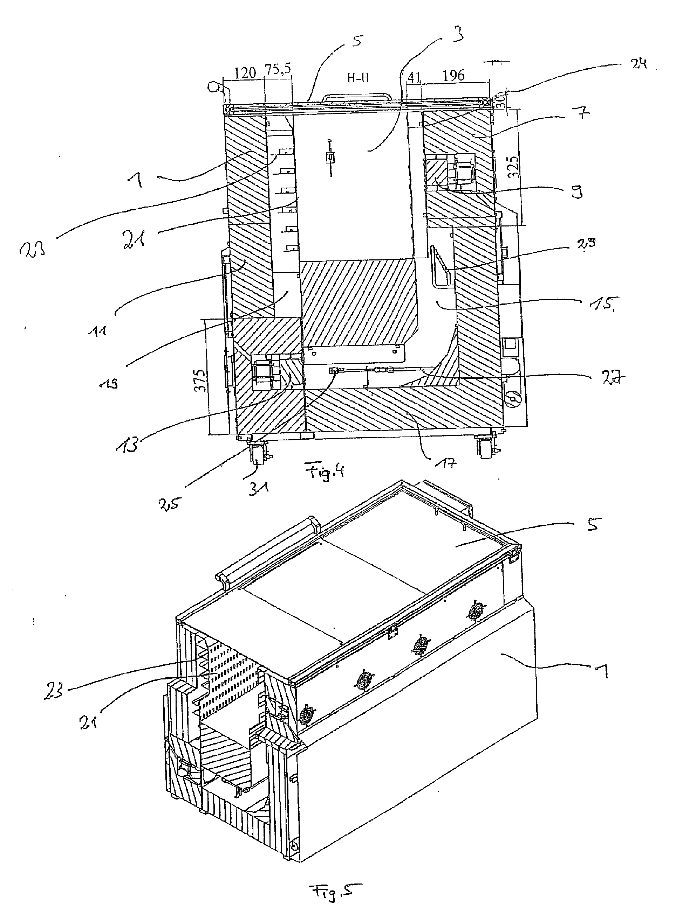

Die Kühlvorrichtung umfasst ein quaderförmiges Gehäuse 1, das eine sich in Längsrichtung der Kühlvorrichtung erstreckende Gefrierkammer 3 umschließt. Die Gefrierkammer 3 ist zur Oberseite der Kühlvorrichtung geöffnet und kann mit in den Fig. 2 und 5 gezeigten auf der Oberseite angeordneten Schiebetüren 5 verschlossen werden. Wie insbesondere in Fig. 4 zu erkennen ist, ist in einer Gehäusewand 7 neben der Gefrierkammer 3 ein erster Lüfter 9 angeordnet. Im unteren Teil der gegenüberliegenden Gehäusewand 11 ist ein zweiter Lüfter 13 angeordnet. Der zweite Lüfter 13 befindet sich unterhalb der Gefrierkammer 3. Der erste Lüfter 9 ist so angeordnet, dass Luft aus der Gefrierkammer 3 in horizontaler Richtung angesaugt wird und in vertikaler Richtung nach unten in einen Kanal 15 abgegeben wird, der sich in Richtung der unteren Gehäusewand 17 der Kühlvorrichtung erstreckt und dann in horizontaler Richtung an der unteren Gehäusewand 15 zum zweiten Lüfter 13 fortsetzt. Der zweite Lüfter 13 ist so angeordnet, dass die Luft aus dem Kanal 15 angesaugt wird und vom Lüfter 13 vertikal nach oben parallel zur Gehäusewand 11 in einen weiteren Kanal 19 abgeben wird. Der Kanal 19 erstreckt sich zur Oberseite der Vorrichtung und mündet seitlich in der Gefrierkammer 3.

Durch die Gefrierkammer 3, den ersten und zweiten Lüfter sowie den Kanal 15 und den Kanal 19 wird ein ringförmiger Strömungsweg gebildet, auf dem ein Kühlmittel, wie beispielsweise ein Kühlgas zirkulieren kann, durch das biologische Proben, wie beispielsweise Tiersamen, die in der Gefrierkammer 3 in (nicht gezeigten) Behältern oder Röhrchen angeordnet sind, gleichmäßig umströmt werden.

Zur Erzeugung einer laminaren Strömung des Kühlmittels in allen Bereichen und unabhängig vom Ort der Probe in der Gefrierkammer 3 ist zwischen dem parallel zur Gehäusewand 11 verlaufenden Kanal 19 und der Gefrierkammer 3 eine mit länglichen Öffnungen versehene Platte 21 angeordnet, die zur Vergleichmäßigung des in die Gefrierkammer 3 eintretenden Kühlmittelstroms und zur Vermeidung von Turbulenzen dient. Da der Kühlmittelstrom lediglich an den Öffnungen durch die Platte 21 in die Gefrierkammer 3 eintreten kann, baut sich bei einer ausreichenden Stärke des Kühlmittelstromes im Kanal 19 an der Platte 21 ein Staudruck auf. Dadurch wird erreicht, dass an allen Öffnungen in der Platte 21 laminare und parallel gerichtete Kühlmittelteilströme in die Gefrierkammer 3 eintreten, so dass in der Gefrierkammer 3 über deren gesamten Querschnitt sehr homogene Einfrierkurven für alle dort gelagerten Proben erreicht werden.

Zur Erzeugung von homogenen Einfrierkurven in allen Bereichen in der Gefrierkammer 3 sind des Weiteren im Kanal 19 an der Platte 21 Bleche 23 befestigt, die sich quer zum Kanal 19 und zum darin strömenden Kühlmittel erstrecken und deren Breite entlang des Kanals 19 mit Abstand vom zweiten Lüfter 13 zunimmt. Die Bleche 23 erstrecken sich in Längsrichtung des Innenraums der Kühlvorrichtung über die gesamte Breite des Kanals 19. Entlang des Kanals 19 weisen die Bleche 23 denselben Abstand voneinander auf. Die Bleche 23 bewirken, dass Teile des Kühlmittelstromes aus der vertikalen Strömungsrichtung in die horizontale Richtung abgelenkt und durch die Öffnungen in der Platte 21 geleitet werden.

Da die Stärke des sich durch den Kanal 19 fortbewegenden Kühlmittelstroms aufgrund der Ablenkung durch die Bleche 23, von einem Blech zum nächsten abnimmt, ist es vorteilhaft, entlang des Kanals 19 durch die zunehmende Breite der Bleche 23 einen immer größeren Teil des verbleibenden Kühlmittelstromes in die Gefrierkammer 3 umzuleiten, um an der Platte 21 und in der Gefrierkammer 3 Kühlmittelteilströme mit gleicher, zu- oder abnehmender Stärke zu erreichen. Die Zunahme der Breite der Bleche 23 kann, wie bei der gezeigten Ausführungsform, linear sein. Jedoch sind auch andere Verläufe der Zunahme der Breite der Bleche denkbar, wie beispielsweise eine exponentielle Zunahme. Die Wahl der Breite der Bleche hängt darüber hinaus davon ab, ob Teilströme mit gleicher oder unterschiedlicher Stärke erzeugt werden sollen.

Es auch denkbar, den Abstand zwischen den Blechen 23 nicht gleich zu wählen, sondern entlang des Kanals 19 mit zunehmendem Abstand vom Lüfter 13, beispielsweise linear, zu verringern. Gleichzeitig kann die Breite der Bleche 23 entlang des Kanals 19 gleich bleiben oder zunehmen, insbesondere in geringerem Umfang zunehmen als bei gleich bleibenden Abständen zwischen den Blechen 23.

Bei der gezeigten Ausführungsform sind die Breiten der Bleche 23 und die Abstände zwischen den Blechen 23 so gewählt, dass der Kühlmittelteilstrom, der unmittelbar an der Oberseite der Gefrierkammer 3 vorbeiströmt, die höchste Strömungsgeschwindigkeit aufweist, während die Strömungsgeschwindigkeit bei den darunter liegenden Kühlmittelteilströmen sukzessive abnimmt. Dadurch können in der Gefrierkammer 3 über deren Querschnitt homogenere Einfrierkurven in allen Ebenen erreicht werden, als mit Kühlmittelteilströmen, die über die gesamte Höhe der Gefrierkammer 3 die gleiche Geschwindigkeit aufweisen. Dies liegt zumindest zum Teil daran, dass an der Oberseite der Gefrierkammer 3 über die Schiebetür 5 ein Wärmeaustausch mit der Umgebung erfolgt, durch den der oberste und in geringerem Maße auch weitere darunter liegende Kühlmittelteilströme erwärmt werden, was bei Kühlmittelströmen gleicher Stärke über die gesamte Höhe der Gefrierkammer 3 zu Abweichungen zwischen den Einfrierkurven für Samenproben, die sich im oberen Teil der Gefrierkammer 3 befinden, und weiter unten in der Gefrierkammer 3 angeordneten Samenproben führen würde.

Auch auf der zur Platte 21 gegenüberliegenden Seite der Gefrierkammer 3 sind vor dem Lüfter 9 eine oder mehrere mit Öffnungen versehenen Platten 24 angeordnet, die den Raum der Gefrierkammer 3 begrenzen.

Insgesamt wird, wie insbesondere in Fig. 4 zu erkennen ist, durch die Anordnung der Lüfter 9, 13, die Form der Kanäle 15, 19 und die Anordnung der Gefrierkammer 3 als Teil des Kanals ein ringförmiger Strömungskanal erzeugt, wobei die Einfrierkurven in der Gefrierkammer 3 über den gesamten Querschnitt derselben besonders homogen sind.

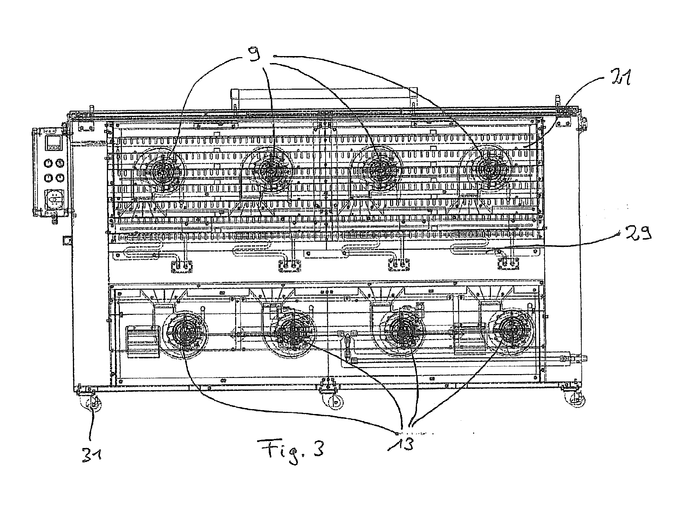

Zur Erzeugung eines breiten Kühlmittelstromes sind bei der gezeigten Ausführungsform sowohl hinter der Gefrierkammer 3 als auch unterhalb der Gefrierkammer jeweils vier Lüfter 13 nebeneinander angeordnet. Dies ist insbesondere in Fig. 3 gut zu erkennen. Der seitliche Abstand zwischen den nebeneinander angeordneten Lüftern 9, 13 ist so gewählt, dass die aus den benachbarten Lüftern 9, 13 austretenden Ströme sich zu einem gleichmäßigen homogenen Gesamtstrom überlagern oder vereinen. Bei einem gleichzeitigen Betrieb der nebeneinander angeordneten Lüfter 9, 13 wird ein sich über die gesamte Breite der Vorrichtung erstreckender und gleichzeitig sehr homogener Kühlmittelstrom erzeugt, der in der Gefrierkammer 3 angeordnete Samenproben gleichmäßig umströmt, so dass selbst beim Einfrieren großer Chargen homogene Einfrierkurven für alle Samenproben erreicht werden können.

Die jeweils nebeneinander in den Gehäusewänden 7, 11 angeordneten Lüfter 9, 13 sind in einem ausziehbaren Gehäuseteil angeordnet, sodass sie für Wartungszwecke gut zugänglich sind.

Zur Einführung des Kühlmittels in den Kühlmittelstrom ist im unteren Teil des parallel zur unteren Gehäusewand 17 der Vorrichtung verlaufenden Kanals 15 eine Düse 25 angeordnet, die über eine Leitung 27 mit einem (nicht gezeigten) Kühlmittelbehälter verbunden ist, in dem als Kühlmittel beispielsweise flüssiger Stickstoff aufbewahrt werden kann. Über die vorzugsweise regelbar ausgebildete Düse kann eine gewünschte Menge des Kühlmittels in den Kühlmittelstrom zugeführt werden. Durch Regelung der Düse und der Menge des zugeführten Kühlmittels kann ein gewünschtes Temperaturprofil für die Einfrierung der Samenproben erzeugt werden.

Insgesamt sind in der gezeigten Kühlvorrichtung vier jeweils vor den Lüftern 13 unter der Gefrierkammer 3 angeordnete Düsen 25 und entsprechende Leitungen 27 für das Kühlmittel vorgesehen.

Im Kanal 15 sind zwischen den oberen Lüftern 9 und der Düse 25 für die Zufuhr des Kühlmittels jeweils Heizungen 29 angeordnet. Mit den hier vorgesehenen vier Heizungen 29, die beispielsweise als regelbare elektrische Widerstandsheizungen ausgeführt sein können, kann die Temperatur des Kühlmittels bzw. Kühlmittelstromes beeinflusst werden und kann damit als ein Parameter zur Einstellung eines Temperaturprofils dienen. Da sich die Heizungen 29 in der Nähe der ersten Lüfter 9 befinden, sind diese Lüfter 9 insbesondere für die Verteilung der durch die Heizungen 29 erwärmten Luft oder Kühlmittels wirksam und werden auch zum Erwärmen der Kühlvorrichtung beispielsweise auf Raumtemperatur eingesetzt.

Zur Verminderung einer Wärmeübertragung sind darüber hinaus alle Gehäusewände der Vorrichtung mit Ausnahme der Oberseite, an der die Türen 5 angeordnet sind, mit einer dicken Isolierung versehen, die beispielsweise aus Styropor gebildet sein kann.

Wie des Weiteren in den Figuren zu erkennen ist, sind an der Unterseite der Vorrichtung Rollen 31 angeordnet, sodass die Vorrichtung als eine bewegliche Einheit ausgebildet ist.

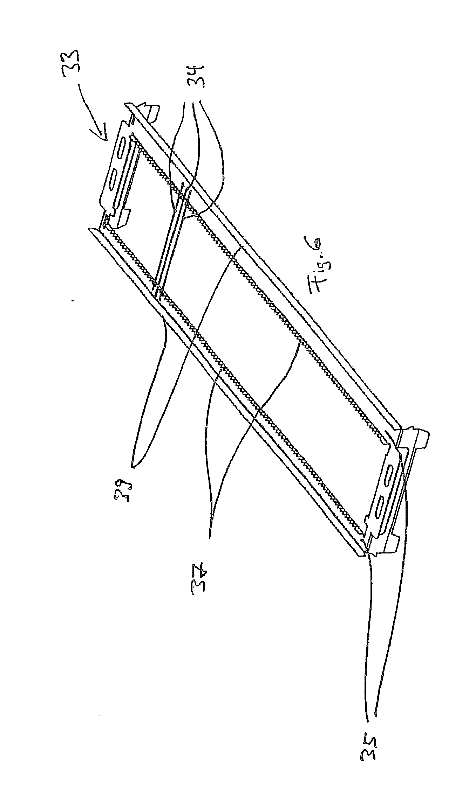

In der Gefrierkammer, 3 können Einfrierrampen 33 aufgenommen werden, auf welchen Samenproben enthaltende Röhrchen 34 mit einem Durchmesser von 2 bis 3 mm nebeneinander liegend angeordnet werden können. Ein Beispiel einer Einfrierrampe 33 ist in Fig. 6 gezeigt. Die Rampen 33 können übereinander gestapelt werden. In der Gefrierkammer 3 sind die Röhrchen 34, in welchen die Samenproben enthalten sind, vorzugsweise parallel zur Strömungsrichtung des Kühlmittelstromes auf den Rampen 33 angeordnet.

Die Rampen 33 sind mit Füßen versehen, die beim Stapeln einen Abstand von 12 mm zwischen den Rampen 33 gewährleisten, so dass das Kühlmittel ungehindert zwischen den Rampen hindurch strömen kann und die Wärmekapazität des mit den Röhrchen in Kontakt kommenden Kühlmittels ausreichend ist, um eine rasche und gleichmäßige Abkühlung und Einfrierung aller Röhrchen 34 zu gewährleisten. Darüber hinaus ist die Höhe der Rampen 33 so gewählt, dass die Röhrchen 34 auf gleicher Höhe mit den Öffnungen in der Platte 21 ausgerichtet sind, so dass die aus den Öffnungen strömenden Kühlmittelteilströme direkt auf die Röhrchen 34 treffen und diese gleichmäßig umströmen.

In Strömungsrichtung des Kühlmittels werden der aus den Rampen 33 gebildete Stapel in einer Entfernung von 10 bis 20 cm von der Platte 21 aufgestellt, damit sich die aus den Öffnungen in der Platte 21 ausströmenden Kühlmittelströme homogenisieren und zu einem Gesamtstrom vereinen können, bevor sie die Röhrchen 34 erreichen. Hinter dem Stapel befindet sich in einem Abstand von 5 bis 10 cm die Platte 24, die die Rückwand der Gefrierkammer 3 bildet. Die Tiefe der Gefrierkammer 3 ist so gewählt, dass auch in Strömungsrichtung zwei Stapel aus Rampen 33 hintereinander aufgestellt werden können. Dies dient dazu, dass nach dem Einfriervorgang der einzelne in der Gefrierkammer 3 aufgestellte Stapel in zwei hintereinander stehende Stapel mit der halben Höhe des ursprünglichen Stapels aufgeteilt werden kann, um die tiefgekühlten Röhrchen im unteren Bereich der Gefrierkammer 3 zu lagern bis die einzelnen Rampen 33 entleert sind, da im unteren Bereich Gefrierkammer 3 die Gefahr einer Erwärmung der Röhrchen 34 geringer ist.

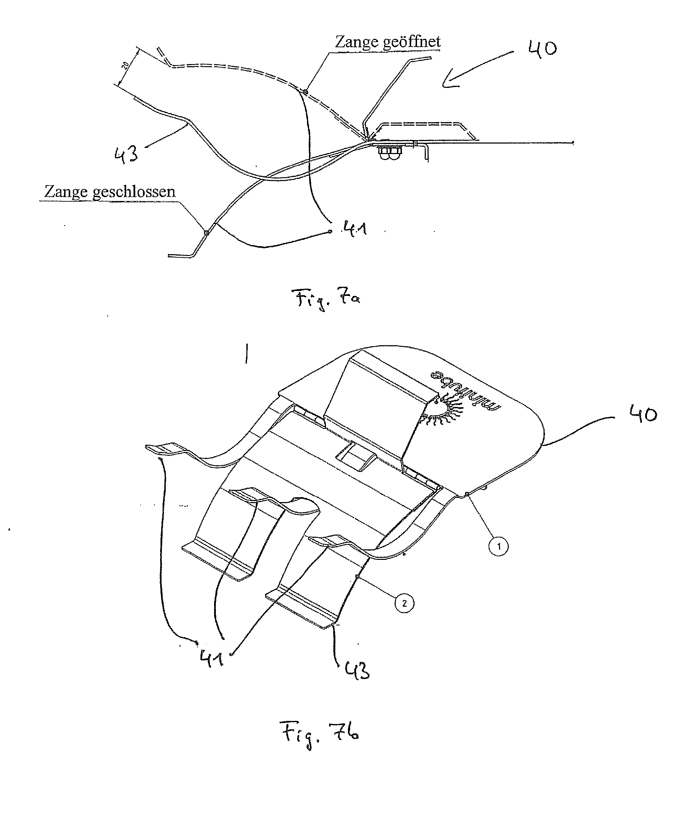

Zur Entnahme der Röhrchen 34 von den Rampen 33 sind auf diesen sich in Längsrichtung erstreckende Führungen 35 ausgebildet, die zur Führung eines Instrumentes 40 zur Entnahme der Röhrchen 34 dienen. Die Führungen 35 umfassen an beiden Außenseiten der Rampe 33 sich nach oben erstreckende Abschnitte 39, die ein seitliches Abrutschen des Instrumentes 40 verhindern. Ein Beispiel eines zur Entnahme der Röhrchen 34 geeigneten Instrumentes 40 ist in Fig. 7 a von der Seite und in Fig. 7 b perspektivisch gezeigt. Das Instrument 40 weist die Form einer Klammer oder Zange auf, wobei die sich gegenüberliegenden Arme 41 und 43 der Klammer mit einer Feder gegeneinander vorgespannt sind. Beim Aufnehmen der Röhrchen von der Rampe 33 werden die beiden äußeren Arme 41 der geöffneten Klammer 40 entlang der Führungen 35, 39 auf der Rampe 33 geschoben. Dabei werden die Röhrchen 34 von Trägerblechen 37 der Rampe, auf welchen sie während des Einfriervorgangs liegen, auf die Arme 41 geschoben, so dass sie nach dem Schließen der Klammer von der Rampe 33 entnommen werden können. Die Führungen 35 an der Rampe 33 haben den Vorteil, dass mit der Klammer 40 nur die Röhrchen 34, die auf der Rampe 33 angeordnet sind, auf welcher die Klammer 40 geschoben wird, ergriffen werden, nicht jedoch die Röhrchen 34 auf der sich darunter befindenden Rampe 33, was zu einer reibungslosen und schnelleren Entnahme der Röhrchen 34 führt. Um ein Erwärmen der Röhrchen 34 bei der Entnahme zu verhindern, wird die Klammer vor der Entnahme auf die Temperatur der Röhrchen 34 abgekühlt.

Mit der gezeigten Ausführungsform der erfindungsgemäßen Kühlvorrichtung können Chargen von bis zu 5250 Samenröhrchen kontrolliert eingefroren werden, wobei jedes einzelne Röhrchen 34 die gleiche Einfrierkurve durchläuft. Dies wird insbesondere durch die oben beschriebene Kühlmittelströmung in der Gefrierkammer 3 erreicht, durch die die Gefrierkammer 3 komplett und so erfasst wird, dass keine Kälte- oder Wärmezonen entstehen.

Zur kontrollierten Einfrierung der Röhrchen 34 wird vorzugsweise eine kombinierte Steuerung der Temperatur in der Gefrierkammer 3 und der Strömungsgeschwindigkeit des Kühlmittelstromes über die Lüfter 9, 13 vorgenommen. Dazu ist in der Vorrichtung eine (nicht gezeigte) Steuerung vorgesehen, mit der Parameter, wie beispielsweise die Strömungsgeschwindigkeit des Kühlmittelstromes, die Menge des zugeführten Kühlmittels und die Temperatur des Kühlmittelstroms oder daraus zusammengesetzte Temperaturprofile kontrolliert, eingestellt und programmiert werden können.

Zur Einstellung der Einfrierkurve für die Samenproben wird die ideale Einstellung der Parameterströmungsgeschwindigkeit und Temperatur des Kühlmittelstroms in der Gefrierkammer 3 empirisch ermittelt. Dies wird unter anderem durch die Durchführung von Einfrierversuchen mit anschließender spermatologischer Bewertung der Samenproben erreicht. Daraus kann eine optimale Kombination aus Strömungsgeschwindigkeit und Temperatur für jeden Teilbereich der Einfrierkurve und eine optimale Einfrierrate ermittelt werden.

Mit der Optimierung der Parameter kann darüber hinaus auch eine Reduzierung des Stickstoffverbrauchs verbunden sein, wodurch die Betriebskosten gesenkt werden können.

An der gezeigten und beschriebenen Ausführungsform können zahlreiche Modifizierungen vorgenommen werden, ohne den Umfang der Erfindung zu verlassen.

Insbesondere ist es denkbar, die Gesamtlänge der Kühlvorrichtung und damit auch die Anzahl der nebeneinander angeordneten Lüfter zu variieren, insbesondere zu vergrößern oder zu verringern. Darüber hinaus ist es ebenfalls denkbar, die Höhe der Gefrierkammer 3 zu variieren. Ferner kann auch die Anzahl, der Abstand und die Anordnung der Bleche 23 variiert werden. Insbesondere ist es denkbar die Bleche statt bei einem Winkel von 90° mit einem geringeren Winkel, wie beispielsweise 75°, 65°, 55° oder 45° im Verhältnis zur Platte 21 anzuordnen. Auch ist es denkbar den Winkel der Bleche 23 im Verhältnis zur Platte 21 von einem Blech 23 zum nächsten zu variieren, beispielsweise mit zunehmendem Abstand vom Lüfter 13 stetig, linear oder gemäß einer anderen Vorgabe zu vergrößern oder zu verkleinern. Des weiteren ist es denkbar, den Durchmesser beziehungsweise die Höhe oder Breite der Öffnungen in der Platte 21 entlang einer Richtung oder entlang mehrerer Richtungen der Platte 21, d.h. beispielsweise in Richtung der Höhe oder der Breite der Platte 21 kontinuierlich oder schrittweise (abschnittsweise) zu erhöhen. Die Kühlvorrichtung kann auch für andere Behälter für biologisches Material verwendet werden, die nicht die Form eines Röhrchens aufweisen oder Röhrchen mit anderen Durchmessern als den der beispielhaft angegebenen Ausführungsform.

### Bezugszeichenliste:

- 1 -: Gehäuse
- 3 -: Gefrierkammer
- 5 -: Schiebetür
- 7 -: Gehäusewand
- 9 -: Lüfter
- 11 -: Gehäusewand
- 13-: Lüfter
- 15 -: Kanal
- 17-: untere Gehäusewand
- 19 -: Kanal
- 21-: Platte
- 23 -: Blech
- 24 -: Blech
- 25-: Düse
- 27 -: Leitung
- 29 -: Heizung
- 31 -: Rolle
- 33 -: Rampe
- 34 -: Röhrchen
- 35-: Führung
- 37 -: Trägerblech
- 39 -: Abschnitt der Führung
- 40 -: Entnahmeinstrument
- 41 -: Arme
- 43 -: Anne

## Patentansprüche

1. Kühlvorrichtung zur Einfrierung von biologischem Material, insbesondere Tiersamen, mit zumindest einem Lüfter (9, 13) und einer Kühlquelle zur Erzeugung eines Kühlmittelstromes und mit einer Gefrierkammer (3) für das biologische Material, wobei die Kühlvorrichtung des weiteren einen ringförmigen Kanal aufweist, der mit der Güfrierkammer (3) verbunden ist, so dass der Kühlmittelstrom durch den Kanal und die Gefrierkammer (3) zirkuliert werden kann, und die Kühlvorrichtung eine Strömungsleiteinrichtung für das Kühlmittel umfasst, die an der Gefrierkammer angeordnet und eingerichtet ist, den Kühlmittelstrom in mehrere Teilströme aufzuteilen und diese in die Gefrierkammer zu leiten, so dass in der Gefrierkammer, zumindest in einem Teilbereich eine homogene Einfrierkurve erzeugt wird.

2. Kühlvorrichtung nach Anspruch 1, **dadurch gekennzeichnet, dass** die Strömungsleiteinrichtung so eingerichtet ist, dass an mehreren Stellen entlang des Kühlmittelstromes parallel gerichtete Teilströme in die Gefrierkammer abgelenkt werden.

3. Kühlvorrichtung nach Anspruch 1 oder 2, **dadurch gekennzeichnet, dass** die Strömungsleiteinrichtung so eingerichtet ist, dass die Strömungsgeschwindigkeit zwischen zumindest zwei benachbarten Teilströmen zunimmt.

4. Kühlvorrichtung nach einem der Ansprüche 1 bis 3, **dadurch gekennzeichnet, dass** die Strömungsleiteinrichtung mehrere in Richtung des Kühlmittelstromes hintereinander angeordnete Bleche (23) umfasst, deren Breite zunimmt.

5. Kühlvorrichtung nach einem der Ansprüche 1 bis 4, **dadurch gekennzeichnet, dass** die Gefrierkammer horizontal von den Teilströmen durchströmt wird und der Kanal seitlich in die Gefrierkammer (3) mündet, wobei die Teilströme durch die Strömungsleiteinrichtung in die horizontale Richtung abgelenkt werden, so dass die Summe der Querschnitte der parallelen Teilströme gegenüber dem Querschnitt des ursprünglichen Kühlmittelstromes vergrößert ist

6. Kühlvorrichtung nach einem der Ansprüche 1 bis 5, **dadurch gekennzeichnet, dass** die Kühlvorrichtung des weiteren eine Einrichtung zur Vergleichmäßigung des Kühlmittelstromes mit einer mehrere Öffnungen aufweisenden Platte (21) umfasst, welche vom Kühlmittel durchströmt wird.

7. Kühlvorrichtung nach Anspruch 6, **dadurch gekennzeichnet, dass** die Öffnungen der Platte (21) so gewählt sind, dass vor der Platte (21) ein Staudruck des Kühlmittelstromes im Kanal zu erzeugt wird.

8. Kühlvorrichtung nach Anspruch 6 oder 7, **dadurch gekennzeichnet, dass** die Einrichtung zur Vergleichmäßigung des Kühlmittelstromes am Eingang der Gefrierkammer, stromabwärts der Strömungsleiteinrichtung angeordnet ist

9. Kühlvorrichtung nach einem der einem der Ansprüche 1 bis 8, **dadurch gekennzeichnet, dass** die Kühlvorrichtung zumindest einen in Strömungsrichtung hinter der Gefrierkammer (3) angeordneten ersten Lüfter (9) und zumindest einen in Strömungsrichtung vor der Gefrierkammer (3) angeordneten zweiten Lüfter (13) aufweist.

10. Kühlvorrichtung nach einem der Ansprüche 1 bis 9, **gekennzeichnet durch** mehrere Rampen (33), die in der Gefrierkammer (3) angeordnet werden können und auf welchen Behälter zur Aufnahme von biologischem Material angeordnet werden können.

11. Kühlvorrichtung nach Anspruch 10, **dadurch gekennzeichnet, dass** die Rampen aufeinander stapelbar sind, wobei zwischen den Rampen ein Abstand verbleibt, so dass die Behälter zur Aufnahme von biologischem Material ungehindert umströmt werden können.

12. Kühlvorrichtung nach Anspruch 11 oder 12, **dadurch gekennzeichnet, dass** zumindest eine der Rampen Führungen aufweist, um ein Instrument zur Entnahme der auf der Rampe angeordneten Behälter zu führen.

13. Verfahren zur Einfrierung von biologischem Material, insbesondere Tiersamen, in einer Kühlvorrichtung mit zumindest einem Lüfter (9, 13) und einer Kühlquelle zur Erzeugung eines Kühlmittelstromes und mit einer Gefrierkammer (3) für das biologische Material, wobei die Kühlvorrichtung des weiteren einen ringförmigen Kanal aufweist, der mit der Gefrierkammer (3) verbunden ist, so dass der Kühlmittelstrom durch den Kanal und die Gefrierkammer (3) zirkuliert werden kann, wobei das Verfahren ein Aufteilen des Kühlmittelstromes in mehrere Teilströme mittels einer Strömungsleiteinrichtung und ein Leiten der Teilströme in die Gefrierkammer umfass[C2], so dass in der Gefrierkammer zumindest in einem Teilbereich eine homogene Einfrierkurve erzeugt wird.

14. Verfahren nach Anspruch 13, **gekennzeichnet durch** den Schritt des Ablenkens von parallel gerichteten Teilströmen **durch** die Strömungsleiteinrichtung in die Gefrierkammer an mehreren Stellen entlang des Kühlmittelstromes.

15. Verfahren nach Anspruch 14, **dadurch gekennzeichnet, dass** das Ablenken der parallel gerichteten Teilströmen derart erfolgt, dass die Strömungsgeschwindigkeit zwischen zumindest zwei benachbarten Teilströmen zunimmt.
